# EUROPÄISCHE PATENTSCHRIFT

(11) **EP 3 661 048 B1**
(45) Veröffentlichungstag und Bekanntmachung des Hinweises auf die Patenterteilung: **01.06.2022**
(21) Anmeldenummer: 19000522.3
(22) Anmeldetag: 18.11.2019
(51) Int. Cl.: H02P 29/50

(54) **VERFAHREN ZUR ANSTEUERUNG EINES ANTRIEBSMOTORS EINES AKTUATORS SOWIE ANTRIEBSMOTOR EINES AKTUATORS**
DRIVE MOTOR OF AN ACTUATOR AND METHOD FOR CONTROLLING A DRIVE MOTOR OF AN ACTUATOR
PROCÉDÉ DE COMMANDE D'UN MOTEUR D'ENTRAÎNEMENT D'UN ACTIONNEUR AINSI QUE MOTEUR D'ENTRAÎNEMENT D'UN ACTIONNEUR

(30) Priorität: 27.11.2018 DE 102018009408
(43) Veröffentlichungstag der Anmeldung: 03.06.2020
(73) Patentinhaber: SBS-Feintechnik GmbH & Co. KG, 78136 Schonach/Schwarzwald (DE)
(72) Erfinder: Gnauert, Uwe, 78050 Villingen-Schwenningen (DE)
(74) Vertreter: Kohl, Karl-Heinz

(56) Entgegenhaltungen:
- DE-A1-102008 040 920
- DE-A1-102010 025 207
- DE-A1-102017 002 743
- DE-A1-102017 128 260
- ALFONSO CARLOSENA ET AL: "Randomized Carrier PWM With Exponential Frequency Mapping", IEEE TRANSACTIONS ON POWER ELECTRONICS, INSTITUTE OF ELECTRICAL AND ELECTRONICS ENGINEERS, USA, Bd. 22, Nr. 3, 1. Mai 2007 (2007-05-01), Seiten 960-966, XP011180837, ISSN: 0885-8993, DOI: 10.1109/TPEL.2007.897121

## Beschreibung

Die Erfindung betrifft ein Verfahren zur Ansteuerung eines Antriebsmotors eines Aktuators zur Betätigung eines Ventils, insbesondere zur Steuerung von Volumenströmen in einem Verbrennungsmotor, nach dem Oberbegriff des Anspruches 1 sowie einen Antriebsmotor eines Aktuators für eine Ventilwelle dem Oberbegriff des Anspruches 12.

Solche elektromotorisch angetriebene Aktuatoren werden zur Betätigung von Ventilen, zum Beispiel Klappen, Kugelventile und dergleichen, eingesetzt, welche die Steuerung von Volumenströmen übernehmen. Diese sind beispielsweise Abgase, Rohluft in der Motoransaugung, Ansaugluftdrosselung, Flüssigkeiten oder Gase in Kühl-/Heizkreisläufen. Die Abtriebswellen der Aktuatoren übertragen die Stellbewegung auf das jeweilige Ventil.

Die Welle wird gesteuert oder geregelt so verdreht, dass das Ventil in die gewünschte Stellung gelangt. Diese Aufgabe wird bei Aktuatoren ohne Steuereinheit und Motor-Leistungsendstufe direkt von einem übergeordneten Steuergerät übernommen, oder bei Systemen mit Steuereinheit und Motor-Leistungsendstufe vom Aktuator selbst ausgeführt, wobei die Soll-Winkelposition wiederum vom übergeordneten (Motor-) Steuergerät vorgegeben wird. Die Winkelposition wird i.d.R. von beiden Varianten an das übergeordnete Steuergerät rückgemeldet. Der Signalaustausch der Winkelposition kann dabei über ein pulsweitenmoduliertes Signal (PWM-Signal) erfolgen. Das PWM-Signal vom übergeordneten Steuergerät gibt die Information bezüglich der gewünschten Stellung des Ventils. Der Aktuator liefert ebenfalls über ein pulsweitenmoduliertes Signal die Information der Ist-Winkellage an das Steuergerät. Die Information wird über die Größe des Tastverhältnisses der Pulsweitenmodulation angegeben. Bei der Pulsweitenmodulation wird bei konstanter Frequenz das Tastverhältnis des Rechteckimpulses moduliert, also die Breite der ihn bildenden Pulse. Über das zeitliche Verhältnis zwischen der Ein- und der Ausschaltzeit wird die Winkelinformation der Welle mitgeteilt. Das prozentuale Tastverhältnis ist das Maß, um welchen Winkel die Welle gedreht werden muss, damit das Ventil in die gewünschte Position verstellt werden kann. Bei einer Abgasklappe beispielsweise wird der Winkelstellbereich der Abgasklappe einem Tastverhältnis von 10 % bis 90 % zugeordnet. Handelt es sich um einen Aktuator mit Mikrocontroller und Leistungsendstufe, wird die Welle an die gewünschte Position gedreht. Die Winkelposition wird von dem Winkelsensor an der Welle erfasst und an das Steuergerät rückgemeldet.

Die getaktete Spannung kann aber nicht nur zur Informationsübertragung, sondern auch zur Leistungsübertragung genutzt werden. Mittels der getakteten Spannung wird der Antriebsmotor auf Basis einer Taktfrequenz in einem bestimmten Frequenzbereich angesteuert. Das veränderliche Tastverhältnis bildet hierbei die dem Antriebsmotor zuzuführende Leistung ab. In der Regel erfolgt die Ansteuerung des Antriebsmotors über eine Brückenschaltung. Die thermische Belastung der Brückenschaltung nimmt mit steigender Frequenz der getakteten Spannung durch Schaltverluste zu.

Da der Antriebsmotor in der Regel ein Gleichstrommotor mit einem Spulensystem ist, führt die getaktete Ansteuerung des Antriebsmotors zu einer Strommodulation und damit zu einer Magnetflussänderung. Sie wiederum bewirkt durch eine Magnetostriktion Längenänderungen in den Lamellenpaketen von Rotor und/oder Stator des Elektromotors. Diese Art der Ansteuerung mit konstanter Frequenz führt dazu, dass der Antriebsmotor ein deutlich hörbares Geräusch entwickelt, das vom menschlichen Ohr als sehr unangenehm empfunden wird.

Grundsätzlich könnte die Frequenz in den Bereich sehr niedriger Frequenzen oder in den Bereich sehr hoher Frequenzen verlegt werden, was aber erhebliche Nachteile mit sich bringt. Niedrige Frequenzen im Bereich von weniger etwa 200 Hz wären hinsichtlich der Geräuschentwicklung vorteilhafter, sind aber für die Antriebsmotoren dieser Aktuatoren nicht geeignet.

Da das menschliche Gehör sehr hohe Frequenzen, beispielsweise höher als etwa 18 kHz, in der Regel nicht wahrnimmt, wären solche hohen Frequenzen zur Vermeidung der Geräuschentwicklung vorteilhaft. Jedoch führen solche hohen Frequenzen zu weiteren Nachteilen. Die Ansteuerung des Motors über die Brückenschaltung mit diesen Frequenzen hat sich als nachteilig hinsichtlich der Einhaltung gesetzlicher Anforderungen an die Elektromagnetische Verträglichkeit (EMV) herausgestellt. Sie ist damit nicht geeignet, heutige EMV- Anforderungen zu erfüllen. Darüber hinaus nimmt mit steigender Taktfrequenz die thermische Belastung der Brückenschaltung erheblich zu, welches den thermischen Haushalt des Aktuators nachteilig beeinflusst und seine Funktion z.B. bei den hohen Temperaturen an der Abgasanlage einschränkt.

Die Offenlegungsschrift DE102010025207A1 offenbart einen Abgasklappenantrieb mit einem Elektromotor.

Die Offenlegungsschrift DE102017128260A1 offenbart einen elektrischen Antrieb mit zufälliger Veränderung einer Grundfrequenz zum Verringern der durch eine PWM-Schaltfrequenz verursachten Geräusche.

Der Erfindung liegt die Aufgabe zugrunde, das gattungsgemäße Verfahren und den Antriebsmotor so auszubilden, dass die Ansteuerfrequenz des PWM-Signales im hörbaren niedrigen Frequenzbereich liegt, die Wahrnehmung des Störgeräusches aber weniger störend empfunden wird.

Diese Aufgabe wird beim gattungsgemäßen Verfahren erfindungsgemäß mit den kennzeichnenden Merkmalen des Anspruches 1 und beim Antriebsmotor erfindungsgemäß mit den Merkmalen des Anspruches 12 gelöst.

Bei herkömmlicher Pulsweitenmodulation erfolgt die Ansteuerung bei einer festen Nennfrequenz. Beim erfindungsgemäßen Verfahren wird davon abweichend für die pulsweitenmodulierte Motoransteuerung keine konstante Frequenz eingesetzt, sondern die Frequenz der PWM-Ansteuerung wird mehrfach so geändert, dass ein Frequenzgemisch entsteht. Dieses aus unterschiedlichen Frequenzen zusammengesetzte Frequenzgemisch führt dazu, dass die Geräuschentwicklung des Aktuators vom menschlichen Ohr als nicht unangenehm empfunden wird. Durch das Frequenzgemisch kann die Ansteuerfrequenz im niedrigen Frequenzbereich belassen werden. In diesem Frequenzbereich können die Anforderungen an die EMV und den thermischen Haushalt erfüllt werden.

Die Ansteuerfrequenzen werden vorteilhaft in Stufen verändert, was technisch einfach durchführbar ist.

Die unterschiedlichen Ansteuerfrequenzen innerhalb des Frequenzgemisches liegen nahe bei der Nennfrequenz, die für die PWM-Ansteuerung vorgesehen ist.

Bei einer vorteilhaften Ausbildung erstreckt sich das Frequenzgemisch über einige Frequenzgruppen. Hierbei wird ausgenutzt, dass die physiologische Wahrnehmung der Lautstärke beim Hören in Frequenzgruppen erfolgt. Das menschliche Gehör teilt die hörbaren Frequenzen in 24 Frequenzgruppen ein. Daher sorgt ein Frequenzgemisch, das sich über einige solcher Frequenzgruppen erstreckt, für eine angenehme akustische Wahrnehmung der Ansteuerung des Antriebsmotors.

Das Frequenzgemisch kann in vorteilhafter Weise als Rosarauschen ausgebildet sein, wenn die Ansteuerfrequenzen innerhalb einer oder mehrerer Frequenzgruppen mit gleicher Häufigkeit gemischt werden.

Grundsätzlich ist es aber auch möglich, die Ansteuerfrequenzen innerhalb einer Frequenzgruppe mit unterschiedlichen Häufigkeiten zu mischen.

Erfindungsgemäß wiederholt sich eine feste Frequenzfolge. Bei einer bevorzugten Ausführungsform liegen die Frequenzen der Frequenzabfolge für eine ganzzahlige Anzahl von Perioden an, wobei die Anzahl der Perioden im Bereich von 1 bis 0,2 x Ansteuerfrequenz liegt.

Wenn die Frequenz mit unregelmäßiger Anzahl von Perioden variiert, ergibt sich ein vorteilhaft angenehmes Geräusch beim Betrieb des Antriebsmotors. Günstige Bedingungen ergeben sich, wenn die Anzahl der Frequenzen der Frequenzfolge im Bereich von 2 bis 1000 liegt, insbesondere in einem Bereich von 2 bis 50.

Besonders vorteilhaft ist es, wenn zur Bildung des Frequenzgemisches nur wenige Frequenzen eingesetzt werden, weil sich dadurch die technische Realisierung deutlich vereinfacht.

Eine besonders vorteilhafte Ausbildung ergibt sich hierbei, wenn drei unterschiedliche Frequenzen in zwei Frequenzgruppen gemischt werden.

Beim erfindungsgemäßen Verfahren erfolgt die zeitliche Abfolge zwischen den Ansteuerfrequenzen in unregelmäßigen Zeitabständen und mit unregelmäßigem Wechsel der Höhe der Frequenzen. Hierdurch ergibt sich ein besonders vorteilhafter akustischer Höreindruck.

Eine vorteilhafte technische Realisierung ergibt sich, wenn eine feste Frequenzabfolge periodisch wiederholt wird. Hierbei ist die Frequenzabfolge ausreichend lang zu wählen. Beispielhaft sind 35 Frequenzsprünge innerhalb einer Frequenzabfolge mit 63 Perioden vorteilhaft.

Die Ansteuerfrequenz liegt erfindungsgemäß in einem Frequenzbereich höher als etwa 200 Hz in einem Frequenzbereich tiefer als etwa 5 kHz.

Ein besonders bevorzugter Bereich der Ansteuerfrequenzen liegt in einem Frequenzbereich zwischen etwa 1 kHz und etwa 5 kHz.

Vorteilhaft wird der Antriebsmotor des Aktuators über eine Brückenschaltung, vorzugsweise eine H-Brücke, angesteuert.

Der Antriebsmotor ist vorteilhaft über ein Getriebe mit der Welle verbunden und treibt diese an.

Der erfindungsgemäße Antriebsmotor des Aktuators für die Welle wird erfindungsgemäß mit einem solchen Ansteuerverfahren angesteuert. Der Antriebsmotor arbeitet geräuscharm, insbesondere ohne ein für das menschliche Ohr unangenehmes Laufgeräusch. Da der Antriebsmotor im niedrigen Frequenzbereich angesteuert wird, können die gesetzlichen Anforderungen an die EMV erfüllt werden. Auch wird die thermische Belastung insbesondere der Brückenschaltung sehr gering gehalten.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in schematischer Darstellung eine Pulsweitenmodulation (PWM),
- Fig. 2: in schematischer Darstellung ein Blockschaltbild einer Ansteuerung eines Aktuators mit Mikrocontroller, Leistungsendstufe (H-Brückenschaltung), Antriebsmotor und Sensorik,
- Fig. 3: in schematischer Darstellung ein Blockschaltbild eines Aktuators ohne Mikrocontroller,
- Fig. 4: in einem Diagramm den zeitlichen Verlauf der variierenden Frequenzen mit ganzzahliger Anzahl von Wellenlängen bei Durchführung des erfindungsgemäßen Verfahrens.

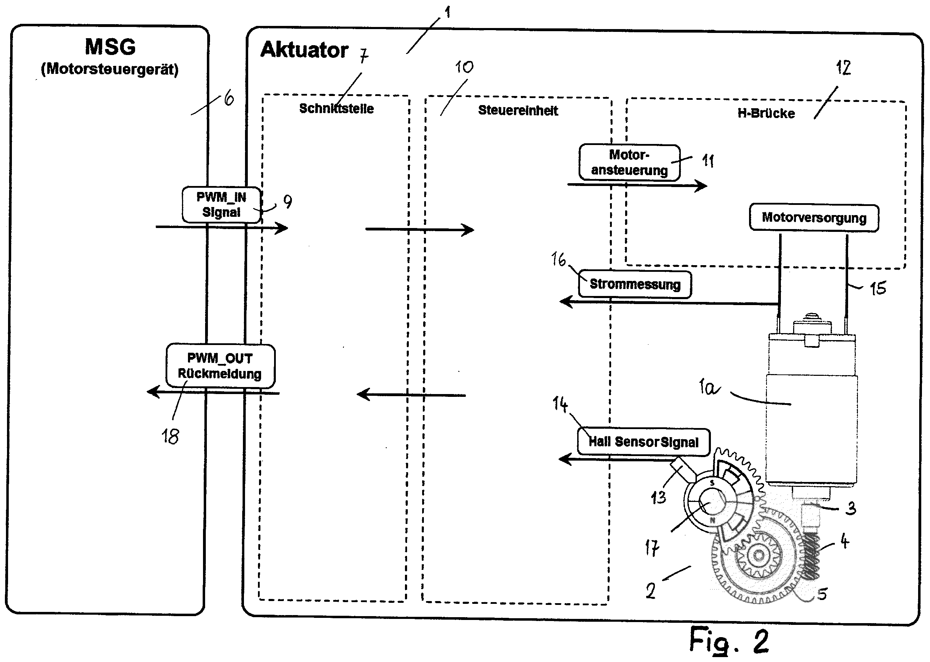

Fig. 2 zeigt einen Aktuator 1 mit einem Antriebsmotor 1a in Form eines Elektromotors, welcher über ein Getriebe 2 eine Welle 17 verstellt. die eine (nicht dargestellte) Klappe, die eine Abgasklappe oder eine Drosselklappe in einem Kraftfahrzeug sein kann, oder ein Ventil eines Kühl-Heiz-Kreislaufs trägt. Je nach Stellung der Welle 17 wird der Strömungsquerschnitt für das Abgas, das Luft/Brennstoffgemisch oder das Gas bzw. die Flüssigkeit des Kühl-Heizkreislaufs verändert. Der Antriebsmotor 1a hat eine Motorwelle 3, die über ein Schneckengetriebe mit einer Schnecke 4 und einem Schneckenrad 5 und wenigstens eine weitere Getriebestufe die die Klappe tragende Welle 17 drehbar antreibt.

Im Ausführungsbeispiel ist das Getriebe ein Schneckengetriebe. Das Getriebe kann auch jedes andere geeignete Getriebe sein, so beispielsweise ein Planeten- oder ein Stirnradgetriebe, wie es bei Stirnradstellern eingesetzt wird.

An den Aktuator 1 ist ein Motorsteuergerät 6 angeschlossen, welches das Steuersignal 9 für den Aktuator vorgibt. Es ist ein Winkelsignal, mit dem die Winkellage der Welle 17 bestimmt wird. Das Steuersignal 9 wird als PWM-Eingangssignal der Steuereinheit 10 des Aktuators über die Schnittstelle 7 zugeführt. Die Steuereinheit generiert aus dem PWM-Eingangssignal 9 ein PWM-Motorsteuersignal 11, das über eine Brückenschaltung 12, vorzugsweise eine H-Brücke, zur Ansteuerung dem Antriebsmotor 1a zugeführt wird. Entsprechend dem pulsweitenmodulierten Signal 11 wird die Motorwelle 3 so gedreht, dass über das Getriebe 2 die Welle 17 in die erforderliche Stellung gebracht wird.

An einem der Getrieberäder sitzt ein Hallsensor 13, mit dem die Ist-Position der Welle 17 erfasst werden kann. Der Hallsensor 13 sendet ein Sensorsignal 14 an den Microcomputer 10, der das Sensorsignal 14 (Istsignal) mit dem PWM-Eingangssignal 9 (Sollsignal) vergleicht. Über diese Regelung wird der Aktuator 1 so betätigt, dass die Welle in ihre erforderliche Solllage gelangt.

Auf die beschriebene Weise wird mittels der getakteten Spannung 11 Leistung über die Leitung 15 dem Antriebsmotor 1a übertragen.

Die Steuereinheit 10 erhält vom Antriebsmotor 1a ein Stromsensorsignal 16, das von der Steuereinheit 10 in geeigneter Weise ausgewertet werden kann.

Die Steuereinheit 10 gibt ein pulsweitenmoduliertes Rücksignal 18 an das Motorsteuergerät 6, das dieses PWM-Rücksignal in geeigneter Weise auswerten kann.

Die Taktfrequenz der PWM-Motoransteuerung 11 liegt in einem Frequenzbereich von 200 Hz bis 25 kHz. Vorteilhaft liegt dieser Frequenzbereich bei etwa 1 bis 5 kHz. Mittels dieser Taktfrequenz wird der Antriebsmotor 1a über die Brückenschaltung 12 angesteuert. Der Antriebsmotor 1a ist ein Gleichstrommotor. Die dem Antriebsmotor 1a zugeführte Leistung wird durch das veränderte Tastverhältnis (0 bis 100 %) bestimmt. Diese Art der Leistungsregulierung ist an sich bekannt und darum auch nur kurz erläutert. Mit steigender Frequenz nimmt die thermische Belastung der Brückenschaltung 12 durch Schaltverluste zu.

Die getaktete Ansteuerung des Antriebsmotors 1a führt zu einer Strommodulation und damit zu einer Magnetflussänderung. Die Magnetflussänderung führt infolge der Magnetostriktion zu Längenänderungen, insbesondere der Lamellen innerhalb des Lamellenpaketes des Rotors des Antriebsmotors 1a.

Aufgrund dieser Ansteuerung strahlt der Aktuator 1 die Frequenz dieser Ansteuerung in Form von Schall ab.

Damit dieser Schall vom Anwender nicht als störend empfunden wird, wird das nachfolgend beschriebene Verfahren eingesetzt. Es ermöglicht, die Ansteuerfrequenz im hörbaren niedrigen Frequenzbereich zu belassen und die Entstörung und die thermische Belastung der Schaltung dadurch günstig zu gestalten.

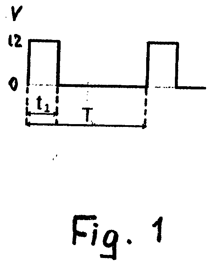

Bei einer herkömmlichen Pulsweitenmodulation wird bei einer konstanten Nennfrequenz 1/T (Fig. 1) das Tastverhältnis t1/T eines Rechteckpulses moduliert, also die Breite der ihn bildenden Pulse. Bei der Pulsweitenmodulation wechselt die Spannung zwischen zwei Werten, die beispielsweise 12 Volt und 0 Volt entsprechen. Die Nennfrequenz 1/T bleibt konstant.

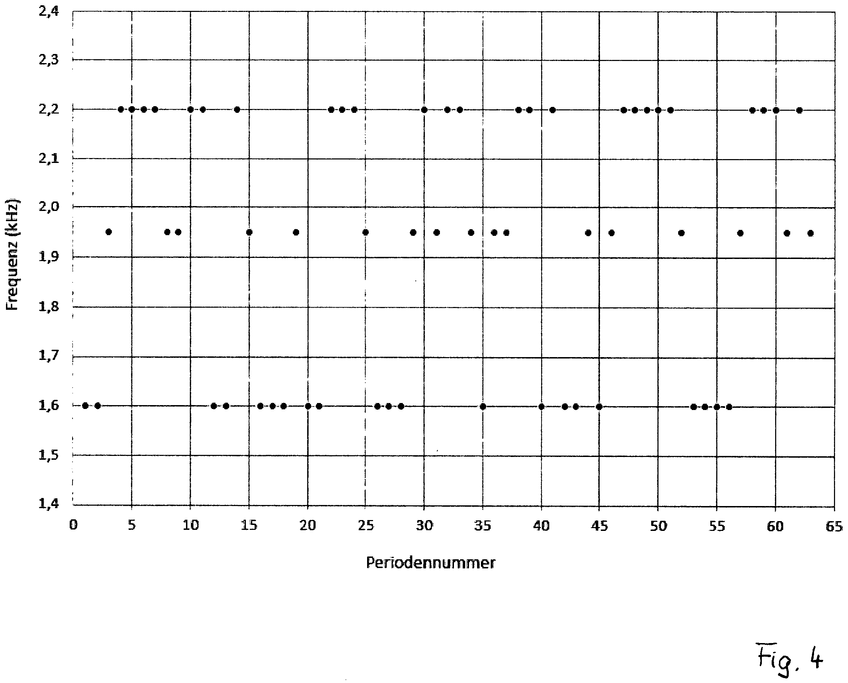

Beim neuen Verfahren hingegen wechselt die Nennfrequenz 1/T, wobei t1 so angepasst wird, dass das Tastverhältnis gleich bleibt. Ein Beispiel hierfür zeigt Fig. 4. Wie sich aus diesem Diagramm ergibt, wird die übliche konstante Frequenz durch eine in Stufen veränderliche Frequenz ersetzt. Es werden neben der Nennfrequenz weitere Frequenzen verwendet, deren Größe in relativer Nähe zur Nennfrequenz liegt. Die Folge hiervon ist, dass in der Summe ein für das menschliche Ohr angenehmes Geräusch entsteht, verglichen mit einer Pulsweitenmodulation mit konstanter Frequenz.

Beispielhaft zeigt Fig. 4 eine Ausführung. Es wird zwischen den drei Frequenzen 1,6 kHz, 1,95 kHz und 2,2 kHz geschaltet, wobei die jeweilige Frequenz über eine ganzzahlige Anzahl von Perioden beibehalten wird. Die Ansteuerung beginnt mit 1,6 kHz über 2 volle Perioden, danach wird für eine Periode auf 1,95 kHz gewechselt, in Folge für 4 Perioden auf 2,2 kHz, dann für 2 auf 1,95 kHz, etc. Nach den 63 Perioden dieser Frequenzfolge wiederholt sich das Muster periodisch.

Wie sich aus Fig. 4 ergibt, wird auf diese Weise die Ansteuerfrequenz über eine ganzzahlige Anzahl von 1 bis 5 Perioden variiert, wobei für eine angenommene konstante Leistung das Tastverhältnis, also das Verhältnis von Einschalt- zu Ausschaltzeit, konstant bleibt. In Summe ergibt sich ein Frequenzgemisch.

Das Frequenzgemisch kann beispielsweise auch als Rosarauschen ausgebildet sein. Dabei werden alle z.B. ganzzahligen Frequenzen einer oder mehrere Frequenzgruppen mit gleicher Häufigkeit gemischt. Selbstverständlich ist auch ein Gemisch unterschiedlicher Häufigkeit möglich.

Die physiologische Wahrnehmung der Lautstärke beim Hören erfolgt in Frequenzgruppen. Das menschliche Gehör teilt die hörbaren Frequenzen in etwa 24 Frequenzgruppen auf. Für eine angenehme akustische Wahrnehmung der Ansteuerung des Antriebsmotors 1a ist ein Frequenzgemisch über 1 bis 3 Frequenzgruppen vorteilhaft, insbesondere über zwei bis 3 Gruppen. Da bei der Ansteuerung des Antriebsmotors 1a nicht mehr eine konstante Frequenz (Nennfrequenz) eingesetzt wird, wird das sonst übliche durchdringende Piepgeräusch des Aktuators 1 so verändert, dass es vom Anwender nicht mehr als störend oder als unangenehm empfunden wird.

Besonders vorteilhaft ist es, wenn das Frequenzgemisch auf wenige Frequenzen beschränkt ist. Dies ermöglicht eine sehr einfache Realisierung der Motoransteuerung. Vorteilhaft ist es, wenn drei Frequenzen in zwei bis drei Frequenzgruppen eingesetzt werden. Die zeitliche Abfolge zwischen den unterschiedlichen Frequenzen erfolgt hierbei in unregelmäßigen Zeitabständen und mit einem unregelmäßigen Wechsel zwischen den unterschiedlichen Frequenzen. Dies ist beispielhaft in Fig. 4 dargestellt. Erkennbar sind nicht nur die unregelmäßigen Zeitabstände, sondern auch der unregelmäßige Wechsel zwischen den Frequenzen. Auf diese Weise ergibt sich ein vorteilhafter akustischer Höreindruck beim Betrieb des Aktuators 1.

Bei einer vorteilhaften Ausbildung wird eine solche unregelmäßige, aber feste Frequenzabfolge periodisch wiederholt. Damit das Geräuschempfinden angenehm ist, wird die Periode der Frequenzabfolge hinreichend lang gewählt. Hierbei hat sich als vorteilhaft herausgestellt, wenn innerhalb einer Frequenzabfolge von 63 Perioden 35 Frequenzsprünge erfolgen. Dies ist in Fig. 4 beispielhaft dargestellt.

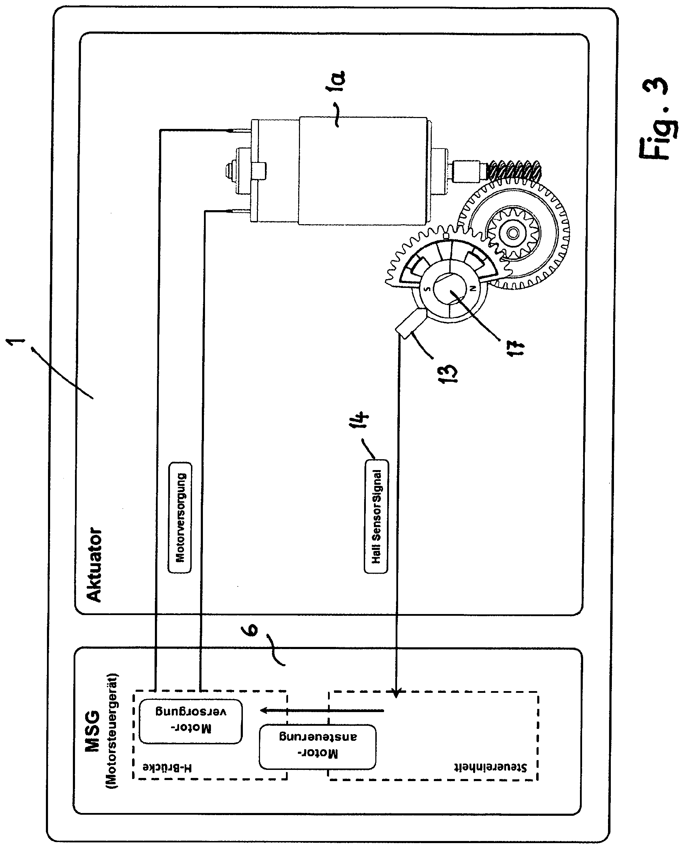

Fig. 3 zeigt in vereinfachter Darstellung einen Aktuator 1, der keine Steuereinheit und keine Motor-Leistungsendstufe aufweist, wie dies beim Ausführungsbeispiel gemäß Fig. 2 der Fall ist. Die Ansteuerung der Welle 17 wird in diesem Falle direkt vom Motorsteuergerät 6 eingeregelt. Die Soll-Winkelposition der Welle 17 wird vom Motorsteuergerät 6 übernommen. Entsprechend der Ausführungsform gemäß Fig. 2 wird die Winkelposition der Welle 17 in Form des Sensorsignals 18 rückgemeldet. Dieses Signal wird vom Motorsteuergerät 6 ausgewertet.

Im Übrigen arbeitet die Ausführungsform gemäß Fig. 3 in gleicher Weise, wie anhand der Fig. 1, 2 und 4 erläutert worden ist.

## Patentansprüche

1. Verfahren zur Ansteuerung eines Antriebsmotors (1a) eines Aktuators (1) zur Betätigung eines Ventils, insbesondere zur Steuerung von Volumenströmen in einem Verbrennungsmotor, **gekennzeichnet dadurch, dass** die Leistung des Antriebsmotors (1a) mittels pulsweitenmodulierter Spannung mit einer Ansteuerfrequenz (11) zugeführt wird, um den Aktuator (1) mit angekoppeltem Ventil in die gewünschte Position zu stellen, und
die Ansteuerfrequenz der PWM-Ansteuerung (11) so geändert wird, dass ein Frequenzgemisch mit einer festen, sich wiederholenden Frequenzabfolge entsteht und die PWM-Schaltfrequenz in einem Frequenzbereich von etwa 200 Hz bis etwa 5 kHz liegt.

2. Verfahren nach Anspruch 1,
**dadurch gekennzeichnet, dass** die Ansteuerfrequenzen in Stufen verändert werden.

3. Verfahren nach Anspruch 1 oder 2,
**dadurch gekennzeichnet, dass** die Ansteuerfrequenzen in der Nähe einer Ansteuer-Nennfrequenz liegen.

4. Verfahren nach einem der Ansprüche 1 bis 3,
**dadurch gekennzeichnet, dass** das Frequenzgemisch sich über einige Frequenzgruppen erstreckt.

5. Verfahren nach einem der Ansprüche 1 bis 4,
**dadurch gekennzeichnet, dass** die Ansteuerfrequenzen innerhalb einer Frequenzgruppe mit gleicher Häufigkeit gemischt werden.

6. Verfahren nach einem der Ansprüche 1 bis 4,
**dadurch gekennzeichnet, dass** die Ansteuerfrequenzen innerhalb einer Frequenzgruppe mit unterschiedlichen Häufigkeiten gemischt werden.

7. Verfahren nach einem der Ansprüche 1 bis 6,
**dadurch gekennzeichnet, dass** die Frequenzen der Frequenzabfolge für eine ganzzahlige Anzahl von Perioden anliegen, wobei die Anzahl der Perioden im Bereich von 1 bis 0,2 x Ansteuerfrequenz liegt.

8. Verfahren nach einem der Ansprüche 1 bis 7,
**dadurch gekennzeichnet, dass** die Frequenzen mit unregelmäßiger Anzahl von Perioden variieren.

9. Verfahren nach einem der Ansprüche 1 bis 8,
**dadurch gekennzeichnet, dass** die Anzahl der Frequenzen der Frequenzfolge im Bereich von 2 bis 1.000 liegt, insbesondere im Bereich von 2 bis 50.

10. Verfahren nach einem der Ansprüche 1 bis 9,
**dadurch gekennzeichnet, dass** der Antriebsmotor (1a) des Aktuators (1) über eine Brückenschaltung (12), vorzugsweise einer H-Brücke, angesteuert wird.

11. Verfahren nach einem der Ansprüche 1 bis 10,
**dadurch gekennzeichnet, dass** der Antriebsmotor (1a) über ein Getriebe (2) die Welle (17) antreibt.

12. Antriebsmotor eines Aktuators einer Ventilwelle, **dadurch gekennzeichnet, daß** er mit einem Verfahren gemäß einem der Ansprüche 1 bis 11 angesteuert wird.

## Claims

1. A method for controlling a drive motor (1a) of an actuator (1) for actuating a valve, in particular for controlling volume flows in an internal combustion engine,
**characterized in that** the power of the drive motor (1a) is supplied by means of pulse-width modulated voltage with a drive frequency (11) in order to move the actuator (1) with a coupled valve to the desired position, and the drive frequency of the PWM drive (11) is changed such that a frequency mixture with a fixed, repeating frequency sequence arises and the PWM switching frequency is in a frequency range of approximately 200 Hz to approximately 5 kHz.

2. The method according to Claim 1,
**characterized in that** the drive frequencies are changed in stages.

3. The method according to Claim 1 or 2,
**characterized in that** the drive frequencies are close to a nominal drive frequency.

4. The method according to one of Claims 1 to 3,
**characterized in that** the frequency mixture extends over several frequency groups.

5. The method according to one of Claims 1 to 4,
**characterized in that** the drive frequencies within a frequency group are mixed with equal frequency.

6. The method according to one of Claims 1 to 4,
**characterized in that** the drive frequencies within a frequency group are mixed with varying frequencies.

7. The method according to one of Claims 1 to 6,
**characterized in that** the frequencies of the frequency sequence are present for an integral number of periods, wherein the number of periods is in the range of 1 to 0.2 x drive frequency.

8. The method according to one of Claims 1 to 7,
**characterized in that** the frequencies vary with an irregular number of periods.

9. The method according to one of Claims 1 to 8,
**characterized in that** the number of frequencies of the frequency sequence is in the range from 2 to 1,000, in particular in the range from 2 to 50.

10. The method according to one of Claims 1 to 9,
**characterized in that** the drive motor (1a) of the actuator (1) is controlled via a bridge circuit (12), preferably a H-bridge.

11. The method according to one of Claims 1 to 10,
**characterized in that** the drive motor (1a) drives the shaft (17) via a gear (2).

12. A drive motor of an actuator of a valve shaft,
**characterized in that** it is controlled with a method according to one of Claims 1 to 11.

## Revendications

1. Procédé de pilotage d'un moteur d'entraînement (1a) d'un actionneur (1) pour actionner une soupape, en particulier pour piloter des débits volumiques dans un moteur à combustion interne,
**caractérisé en ce que** la puissance du moteur d'entraînement (1a) est alimentée au moyen d'une tension à modulation d'impulsion en largeur avec une fréquence de pilotage (11) pour placer l'actionneur (1) dans la position souhaitée avec la soupape couplée, et la fréquence de pilotage de la commande à modulation d'impulsion (11) est modifiée de telle manière qu'il se crée un mélange de fréquences avec une succession de fréquences fixe se répétant et la fréquence de commutation à modulation d'impulsion en largeur se situe dans une gamme de fréquences d'environ 200 Hz à 5 kHz.

2. Procédé selon la revendication 1,
**caractérisé en ce que** les fréquences de pilotage sont modifiées par étapes.

3. Procédé selon la revendication 1 ou 2,
**caractérisé en ce que** les fréquences de pilotage se situent à proximité d'une fréquence nominale de pilotage.

4. Procédé selon l'une quelconque des revendications 1 à 3, **caractérisé en ce que** le mélange de fréquences s'étend sur plusieurs groupes de fréquences.

5. Procédé selon l'une quelconque des revendications 1 à 4, **caractérisé en ce que** les fréquences de pilotage sont mélangées à la même fréquence à l'intérieur d'un groupe de fréquences.

6. Procédé selon l'une quelconque des revendications 1 à 4, **caractérisé en ce que** les fréquences de pilotage sont mélangées à des fréquences différentes à l'intérieur d'un groupe de fréquences.

7. Procédé selon l'une quelconque des revendications 1 à 6, **caractérisé en ce que** les fréquences de la succession de fréquences sont proches d'un nombre entier de périodes, sachant que le nombre des périodes se situe dans une gamme de 1 à 0,2 x fréquence de pilotage.

8. Procédé selon l'une quelconque des revendications 1 à 7, **caractérisé en ce que** les fréquences varient avec un nombre irrégulier de périodes.

9. Procédé selon l'une quelconque des revendications 1 à 8, **caractérisé en ce que** le nombre de fréquences de la suite de fréquences se situe dans la gamme de 2 à 1000, en particulier dans la gamme de 2 à 50.

10. Procédé selon l'une quelconque des revendications 1 à 9, **caractérisé en ce que** le moteur d'entraînement (1a) de l'actionneur (1) est piloté par un circuit de pontage (12), de préférence un pont en H.

11. Procédé selon l'une quelconque des revendications 1 à 10, **caractérisé en ce que** le moteur d'entraînement (1a) entraîne l'arbre (17) par une transmission (2).

12. Moteur d'entraînement d'un actionneur d'un arbre de soupape, **caractérisé en ce qu'**il est piloté avec un procédé selon l'une quelconque des revendications 1 à 11.
